# EUROPÄISCHE PATENTSCHRIFT

(11) **EP 1 477 270 B1**
(45) Veröffentlichungstag und Bekanntmachung des Hinweises auf die Patenterteilung: **12.07.2006**
(21) Anmeldenummer: 04011239.3
(22) Anmeldetag: 12.05.2004
(51) Int. Cl.: B23Q 3/157

(54) **Werkzeugmaschine**
Machine tool
Machine outil

(30) Priorität: 16.05.2003 DE 10323593
(43) Veröffentlichungstag der Anmeldung: 17.11.2004
(73) Patentinhaber: Chiron-Werke GmbH & Co. KG, 78532 Tuttlingen (DE)
(72) Erfinder: Prust, Dirk, 78532 Tuttlingen (DE); Winkler, Hans-Henning, Dr., 78532 Tuttlingen (DE); Haninger, Rudolf, 78606 Seitingen-Oberflacht (DE)
(74) Vertreter: Otten, Hajo

(56) Entgegenhaltungen:
- EP-A- 1 060 847
- DE-A- 3 320 851
- US-A- 3 975 817
- US-A- 3 999 664
- US-A- 5 662 567

## Beschreibung

Die vorliegende Erfindung betrifft eine Werkzeugmaschine mit zumindest einer Arbeitsspindel, in der eine Werkzeugaufnahme für Werkzeughalter vorgesehen ist, und zumindest einem Werkzeugwechselarm mit einem Greifer, in dem ein Werkzeughalter in einer zu dem Greifer umfänglichen Ausrichtung gehalten wird, um diesen Werkzeughalter zwischen seiner von der Werkzeugaufnahme beabstandeten Magazinposition und seiner Arbeitsposition zu überführen, in der der Werkzeughalter in die Werkzeugaufnahme einspannbar ist.

Eine Werkzeugmaschine der vorstehend genannten Art ist aus dem Stand der Technik vielfach bekannt.

Die DE 33 20 851 A1 sowie die DE 40 31 997 A1, auf deren Offenbarung hier ausdrücklich Bezug genommen wird, beschreiben eine Werkzeugmaschine vom Fahrständer-Typ, bei dem eine Arbeitsspindel mit einer an ihrer Stirnseite vorgesehenen Werkzeugaufnahme zum Einspannen genormter Werkzeughalter gegenüber einem Werkstück in drei Raumrichtungen verfahrbar ist. Die Arbeitsspindel ist drehbar in einem Spindelgehäuse gelagert, an dem höhenverschieblich eine Hülse angeordnet ist, die um die Arbeitsspindel herum verteilt mehrere Werkzeugwechselarme trägt. Jeder Werkzeugwechselarm trägt an seinem unteren freien Ende einen Greifer, in dem ein in die Werkzeugaufnahme einspannbarer Werkzeughalter gehalten wird, der an seinem unteren Schaft ein Bearbeitungswerkzeug trägt.

Die Werkzeughalter werden nun je nach Bedarf in die Werkzeugaufnahme eingesetzt, wozu der Werkzeugwechselarm mit dem betreffenden Werkzeughalter nach unten unter die Werkzeugaufnahme geschwenkt wird. Durch Hochfahren der Hülse gelangt der Werkzeughalter dann mit seinem genormten Konus, beispielsweise einem Steilkegel oder einem Kegel-Hohlschaft, in die Werkzeugaufnahme, wo er verspannt wird. Der Greifer verbleibt während des Einsatzes des nunmehr von der Arbeitsspindel angetriebenen Werkzeugs am Werkzeughalter, wodurch ein schneller Werkzeugwechsel möglich ist.

Mit anderen Worten, die um die Arbeitsspindel herum angeordneten Werkzeugwechselarme halten mit ihren Greifern die verschiedenen Werkzeughalter in ihrer Magazinposition, in der sie zu der Werkzeugaufnahme seitlich und nach oben beabstandet sind. Jeweils ein Werkzeug wird in die Arbeitsposition geschwenkt und durch Verfahren der Hülse in die Werkzeugaufnahme hineingeführt. Beim Hochschwenken des Werkzeugwechselarmes mit dem bisher in Betrieb befindlichen Werkzeug kann bereits ein anderer Werkzeugwechselarm nach unten geschwenkt werden, um ein neues Bearbeitungswerkzeug über den betreffenden Werkzeughalter in die Werkzeugaufnahme einzuspannen.

In vielen Fällen ist es bei einer derartigen Werkzeugmaschine wichtig zu wissen, in welcher Orientierung das Werkzeug in die Werkzeugaufnahme eingespannt wurde, was beispielsweise bei einem Rückwärtssenker von Bedeutung ist.

In der Patentliteratur sind verschiedene Konstruktionen beschrieben, wie Werkzeuge "lagerichtig", also bezüglich ihrer umfänglichen Ausrichtung definiert in die Werkzeugaufnahme einer Arbeitsspindel eingesetzt werden können.

So beschreibt beispielsweise die EP 0 354 467 A2 einen Greifer für einen Steilkegel-Werkzeughalter. Zwischen dem Steilkegel, der in die Werkzeugaufnahme eingesetzt wird, und dem Schaft, an dem das Bearbeitungswerkzeug befestigt wird, ist ein verdickter, umlaufender Bund vorgesehen, in dem eine radial nach außen weisende Greifernut vorgesehen ist, in die der Greifer mit seinen Backen eingreift. An dem Greifer ist ein federbelasteter Rasthebel vorgesehen, dessen freies Ende als Rastnase in eine Aussparung am Umfang des Werkzeughalters eingreift, so dass der Werkzeughalter beim Überführen zwischen der Magazin- und der Arbeitsposition unverdrehbar an dem Greifer festgelegt ist. Der Rasthebel wird beim Einführen des Werkzeughalters in die Werkzeugaufnahme über einen Anschlag außer Eingriff mit dem Werkzeughalter gebracht, so dass dieser in die drehende Spindel eingesetzt werden kann. Zum Bestücken der Greifer kann der Rasthebel auch manuell außer Eingriff gebracht werden.

Eine vergleichbare Konstruktion zeigt die EP 0 297 828 A1. Aus dieser Druckschrift ist ein Greifer bekannt, der zwei bewegliche Backen zum Ergreifen von Werkzeughaltern aufweist. Die Backen sind über ein Umlenkgetriebe mit einem Bolzen gekoppelt, der zum Öffnen der Backen gegen einen raumfesten Anschlag gefahren wird. An einer der Backen ist ein Vorsprung vorgesehen, der im geschlossenen Zustand der Backen in eine Aussparung an dem Werkzeughalter eingreift, wodurch auch hier die unverdrehbare Festlegung des Werkzeughalters an dem Greifer bewirkt wird.

Eine ähnliche Greiferkonstruktion zeigt auch die EP 0 761 384 A1, die Backen werden hier jedoch nicht über einen raumfesten Anschlag, sondern über eine an dem Greifer vorgesehene Antriebseinheit gespreizt, um den Werkzeughalter zur Drehung freizugeben.

Damit die Werkzeughalter in definierter Winkellage in die Werkzeugaufnahme eingespannt werden, sind an den genormten Werkzeughaltern vom Typ SK oder HSK Mitnehmernuten vorgesehen, die unterschiedlich tief oder breit ausgebildet oder auf unterschiedlichen Radien angeordnet sind. In der Arbeitsspindel sind Nutensteine vorgesehen, die bei korrekter umfänglicher Ausrichtung zwischen Werkzeughalter und Arbeitsspindel in die Mitnehmernuten eingreifen. Ein Versatz um 180° kann dabei beispielsweise anhand der Eingriffstiefe des Nutensteines in die Mitnehmernut erkannt werden, wie dies beispielsweise aus der EP 0 681 880 A1 bekannt ist.

Wenn ein Werkzeughalter mit Hilfe der oben beschriebenen Greifer in definierter Winkellage zu der Arbeitsspindel in die Werkzeugaufnahme eingesetzt wird, so finden die Nutensteine die Mitnehmernuten innerhalb kürzester Zeit, wodurch ein sehr schneller Werkzeugwechsel ermöglicht wird. Da die Werkzeuge bei mit niedriger Kupplungsdrehzahl rotierender Arbeitsspindel in die Werkzeugaufnahme eingesetzt werden, erfolgt die Freigabe der Werkzeughalter zur Rotation in dem Greifer vor dem Einspannen des Werkzeughalters in die Werkzeugaufnahme.

Aus der EP 0 249 898 A1 ist ein Greifer bekannt, bei dem keine Orientierungsmittel vorgesehen sind, um den Werkzeughalter in definierter umfänglicher Ausrichtung zu dem Greifer zu halten. Der Werkzeughalter liegt mit einer oberen Kegelfläche seiner Greifernut auf einem nach innen vorspringenden Steg an den Backen des Greifers auf, so dass eine Art Reibschluss entsteht. Beim Einsetzen des Werkzeughalters in die Werkzeugaufnahme wird der Werkzeughalter durch die auf einer Ringfläche reibenden Nutensteine, in der die Mitnehmernuten vorgesehen sind, relativ zu dem Greifer verdreht, wobei aber die Reibung zwischen dem Greifer und dem Werkzeughalter dafür sorgt, dass der Nutenstein auf der Stirnfläche "entlangwandert", bis er die Mitnehmernut erreicht hat und in diese eingreift. Erst jetzt wird der Werkzeughalter vollständig in die Werkzeugaufnahme eingespannt. Damit der Greifer auch im Betrieb an dem Werkzeughalter verbleiben kann, wird der Greifer nun etwas nach unten abgesenkt, so dass sich ein Luftspalt zwischen der Greifernut und dem Steg bildet und der Werkzeughalter ohne Reibung in dem Greifer rotieren kann.

Bei der letztgenannten Konstruktion ist von Nachteil, dass die Werkzeugwechselzeit nicht definiert ist, denn der Werkzeughalter wird in beliebiger Winkellage der Arbeitsspindel zugestellt, so dass der Suchlauf der Nutensteine unterschiedlich lang dauern kann. Abhängig von der Höhe der Reibung zwischen Werkzeughalter und Greifer einerseits sowie Werkzeughalter und Nutenstein andererseits kann es darüber hinaus unverhältnismäßig lange dauern, bis der Nutenstein die richtige Mitnehmernut gefunden hat.

Um die Werkzeugwechselzeit zu verkürzen und für eine definierte umfängliche Ausrichtung des Werkzeughalters zu der Arbeitsspindel zu sorgen, werden deshalb häufig die oben diskutierten Greifer mit den Orientierungsmitteln eingesetzt, wobei dort von Nachteil ist, dass die Greifer mechanisch aufwendig aufgebaut sind.

Vor diesem Hintergrund liegt der vorliegenden Erfindung die Aufgabe zugrunde, eine Werkzeugmaschine der eingangs genannten Art dahingehend weiterzubilden, dass ein schneller und sicherer Werkzeugwechsel mit einem lagegenauen Überführen des Werkzeughalters zwischen der Magazinposition und der Arbeitsposition möglich ist.

Erfindungsgemäß wird diese Aufgabe bei der eingangs genannten Werkzeugmaschine dadurch gelöst, dass eine Lagekontrolle für die umfängliche Ausrichtung des Werkzeughalters vorgesehen ist, die eine Fehlausrichtung zwischen Werkzeughalter und Greifer meldet.

Die Erfinder der vorliegenden Anmeldung haben nämlich erkannt, dass durch eine Lagekontrolle verhindert werden kann, dass ein Werkzeughalter in Fehlausrichtung in die Werkzeugaufnahme eingesetzt wird. Diese Lagekontrolle meldet eine Fehlausrichtung beispielsweise an die Maschinensteuerung, die dann ein Warnsignal etc. abgeben kann. Bei Werkzeugmaschinen, bei denen in eine drehende Arbeitsspindel eingekuppelt wird, ist eine derartige Lagekontrolle nicht zwingend erforderlich, bei Werkzeugmaschinen, bei denen in die stehende Arbeitsspindel eingekuppelt wird, erhöht sie jedoch die Sicherheit. Die Lagekontrolle ist aber auch bei den zuerst genannten Werkzeugmaschinen sinnvoll, denn sie unterstützt Bedienungspersonal beim manuellen Auswechseln von Werkzeughaltern. Wenn beispielsweise die Werkzeugmaschine mit neuen Werkzeughaltern bestückt werden soll, ist es in vielen Fällen sinnvoll, die Werkzeughalter in bekannter umfänglicher Ausrichtung in den Greifer einzulegen. Die Aufmerksamkeit des Bedienungspersonals wird durch eine derartige Lagekontrolle unterstützt.

Dabei ist es bevorzugt, wenn die Lagekontrolle bei in Magazinposition befindlichem Werkzeughalter eine Fehlausrichtung erkennt.

Die Erfinder der vorliegenden Anmeldung haben erkannt, dass es ausreichend ist, die umfängliche Ausrichtung zwischen Greifer und Werkzeughalter lediglich in der Magazinposition zu überwachen, denn beim Überführen zwischen der Magazinposition und der Arbeitsposition sowie beim Einkuppeln können sich keine Fehlausrichtungen einstellen, wenn die eingangs diskutierten Orientierungsmittel im Eingriff sind.

Weiter ist es bevorzugt, wenn der Lagekontrolle ein Positionssensor zugeordnet ist, der die umfängliche Ausrichtung des Werkzeughalters zu dem Greifer erkennt.

Hier ist von Vorteil, dass ein einfacher Positionssensor verwendet werden kann, um eine mögliche Fehlausrichtung zu erfassen. Dies kann beispielsweise ein Magnetsensor sein, der auf Nuten in dem Werkzeughalter anspricht.

Allgemein ist es bevorzugt, wenn die Lagekontrolle einem an dem Werkzeugwechselarm angeordneten Werkzeugköcher zugeordnet ist, von dem der Werkzeughalter in seiner Magazinposition zumindest teilweise abgedeckt ist, wobei auch hier vorzugsweise der Lagekontrolle ein Positionssensor zugeordnet ist, der erkennt, ob der Werkzeughalter die Magazinposition in dem Werkzeugköcher erreicht hat.

Auch diese Maßnahme ist konstruktiv von Vorteil, denn die Lagekontrolle kann an dem sowieso vorhandenen Werkzeugköcher vorgesehen werden, so dass auch bestehende Werkzeugmaschinen nachgerüstet werden können.

Weiter ist es bevorzugt, wenn der Positionssensor ein Endlagensensor ist, der meldet, wenn der Werkzeughalter seine vorbestimmte Magazinposition in dem Werkzeugköcher nicht erreicht.

Die Erfinder der vorliegenden Anmeldung haben nämlich erkannt, dass es zu einer Fehlausrichtung zwischen Greifer und Werkzeughalter beim Auswechseln eines zuvor im Einsatz befindlichen Werkzeugs kommen kann, wenn beispielsweise Späne und Kühlmittel die Positionskerbe und/oder den Nutenstein verkleben, so dass diese nicht in Eingriff gelangen können. Bei dem sehr schnellen Beschleunigen und Abbremsen des Werkzeugwechselarms während des Wechselvorgangs kann es dabei zu einer derartigen Fehlausrichtung, also beispielsweise einem Verkippen kommen, so dass ein Einführen des Werkzeughalters in den Werkzeugköcher nicht mehr oder nicht vollständig möglich ist.

Dabei ist es bevorzugt, wenn der Positionssensor an einer Betätigungseinheit für den Werkzeugwechselarm angeordnet ist und vorzugsweise ein Endlagensensor ist, der meldet, ob der Werkzeugwechselarm seine vorbestimmte Stellung für die Magazinposition eingenommen hat.

Hier ist von Vorteil, dass nicht zwingend ein zusätzlicher Positionssensor an dem Werkzeugköcher angeordnet werden muss, um zu überprüfen, ob der Werkzeughalter seine Magazinposition vorgeschrieben erreicht hat. Wenn nämlich der Werkzeughalter nicht vollständig in seine Magazinposition überführt werden kann, kann auch der Werkzeugwechselarm nicht seine für die Magazinposition vorbestimmte Stellung annehmen. Da der Werkzeugwechselarm häufig sowieso über Endlagensensoren überprüft wird, können die bei einer bestehenden Werkzeugmaschine vorhandenen Signale der Endlagensensoren dazu verwendet werden, Informationen über eine mögliche Fehlausrichtung zwischen Werkzeughalter und Greifer abzuleiten.

Dabei ist es insgesamt bevorzugt, wenn der Lagekontrolle ein Sperrelement zugeordnet ist, das verhindert, dass der Werkzeughalter bei Fehlausrichtung zu dem Greifer seine Magazinposition einnimmt.

Hier ist von Vorteil, dass nicht nur verkippte Werkzeughalter erkannt werden, sondern auch geringfügig verdrehte Werkzeughalter.

Vor diesem Hintergrund ist es bevorzugt, wenn das Sperrelement ein an dem Werkzeugköcher angeordnetes Rastelement umfasst, dem eine Vertiefung an dem Werkzeughalter zugeordnet ist, wobei das Rastelement vorzugsweise in dem Werkzeugköcher angeordnet ist und bei lagerichtig in dem Greifer gehaltenen Werkzeughalter in eine in dem Werkzeughalter ausgebildete Mitnehmernut eingrifft, wobei ferner vorzugsweise das Rastelement ein einstückig mit dem Werkzeugköcher ausgebildetes Formelement ist, wobei alternativ das Sperrelement eine an dem Werkzeugköcher vorgesehene Ausnehmung umfasst, der ein Vorsprung an dem Werkzeughalter zugeordnet ist.

Diese Maßnahme ist konstruktiv von Vorteil, es ist lediglich ein Rastelement oder eine Ausnehmung an oder in dem Werkzeugköcher auszubilden, das bzw. die nur bei lagegenauem Werkzeughalter in die entsprechende Vertiefung eingreifen bzw. den entsprechenden Vorsprung aufnehmen kann, ansonsten aber verhindert, dass der Werkzeughalter vollständig in den Werkzeugköcher eingefahren wird.

Auf diese Weise ist eine konstruktiv einfache aber sehr effiziente Lagekontrolle für den Werkzeughalter realisiert, die nicht nur im Betrieb der Werkzeugmaschine von Vorteil ist, sondern auch beim Bestücken der Greifer mit neuen Werkzeughaltern. Wenn nämlich die Bedienungsperson einen Werkzeughalter nicht lagerichtig in den Greifer einsetzt, so kann dieser Werkzeugwechslerarm seine vorbestimmte Magazinposition nicht einnehmen, was der Bedienungsperson unmittelbar durch die Ablaufsteuerung der Werkzeugmaschine gemeldet werden kann.

Es ist damit nicht erforderlich, weitere Sicherheitsmaßnahmen an dem Greifer vorzusehen, die ein Bestücken des Greifers mit einem fehlausgerichteten Werkzeughalter verhindern. Es ist nämlich beispielsweise so, dass genormte Werkzeughalter häufig zwei Orientierungskerben aufweisen, so dass sie auch um 180° versetzt in den Greifer eingelegt werden können, wobei die Orientierungsmittel auch jetzt dafür sorgen, dass der Werkzeughalter unverdrehbar zu dem Greifer gehalten wird. Bei bekannten Greifern sind umfängliche Maßnahmen vorgesehen, um zu verhindern, dass ein Werkzeughalter in falscher Orientierung eingespannt wird, oder dass wegen der falschen Orientierung der Greifer nicht richtig geschlossen wird, so dass er sich im Betrieb der Werkzeugmaschine öffnen und das Werkzeug herausfallen kann.

Der neue Greifer kann jetzt konstruktiv sehr einfach und sehr sicher aufgebaut sein, eine mögliche Fehlausrichtung wird spätestens beim Hochfahren des neu bestückten Greifers in die Magazinposition erkannt. Dabei wird im Falle eines HSK bspw. ausgenutzt, dass die eigentlich für die Positionierung des Werkzeughalters in der Werkzeugaufnahme vorgesehenen Mitnehmernuten unterschiedlich tief ausgebildet sind, so dass durch das Sperrelement sozusagen überprüft wird, ob es in die Mitnehmernut mit der ausreichenden Tiefe eingeführt wird. Auf diese Weise kann also nicht nur eine Fehlausrichtung um wenige Grad, sondern auch eine Fehlausrichtung um 180° problemlos erkannt werden. Ist an dem Werkzeughalter nur eine Positionskerbe vorgesehen, so verkippt er, wenn er nicht in der richtigen Winkellage in den Greifer eingesetzt ist. Durch dieses Verkippen wird dann verhindert, dass Rastelement und Vertiefung bzw. Ausnehmung und Vorsprung miteinander in Eingriff gelangen.

Bei einer derartigen Werkzeugmaschine ist es allgemein bevorzugt, wenn zwischen dem Greifer und dem von ihm getragenen Werkzeughalter Orientierungsmittel vorgesehen sind, die den Werkzeughalter zumindest beim Überführen zwischen der Magazinund der Arbeitsposition unverdrehbar an dem Greifer festlegen.

Diese Maßnahme ist an sich aus dem Stand der Technik bekannt, sie sorgt dafür, dass ein einmal richtig in einen Greifer eingelegter Werkzeughalter sich auch beim Überführen zwischen der Magazin- und der Arbeitsposition nicht verdreht oder verkippt.

Dabei ist es bevorzugt, wenn die Orientierungsmittel den Werkzeughalter nach dessen Einspannen in die Werkzeugaufnahme freigeben, so dass er gegenüber dem Greifer verdrehbar ist.

Die Erfinder der vorliegenden Anmeldung haben nämlich erkannt, dass auch ein schneller Werkzeugwechsel bei stehender Arbeitsspindel möglich ist, was es andererseits erlaubt, die Orientierungsmittel erst nach dem Einspannen des Werkzeughalters in die Werkzeugaufnahme freizugeben. Der Werkzeughalter kann jetzt in bekannter Orientierung in die Werkzeugaufnahme eingesetzt werden, wo er unverzüglich eingespannt werden kann, ohne dass ein Suchlauf der Nutensteine erforderlich ist. Danach werden die Orientierungsmittel freigegeben und die Arbeitsspindel wird auf Betriebsdrehzahl hochgefahren.

In diesem Zusammenhang sei noch bemerkt, dass mit den bekannten Greifern, die gegen einen raumfesten Anschlag gefahren werden, das neue Konzept des Werkzeugwechsels nicht realisiert werden kann, da bei den bekannten Greifern die Orientierungsmittel immer bereits außer Eingriff sind, bevor der Werkzeughalter überhaupt vollständig in die Werkzeugaufnahme eingeführt wurde. Selbst wenn also mit den bekannten Greifern in eine stehende Arbeitsspindel Werkzeughalter eingewechselt würden, gäbe es zu einem bestimmten Zeitpunkt des Werkzeugwechsels einen Betriebszustand, in dem der Werkzeughalter weder an dem bekannten Greifer noch bereits in der Werkzeugaufnahme unverdrehbar festgelegt ist. Sollte der Werkzeughalter während dieser kurzen Zeitspanne, beispielsweise durch das Lösen der Orientierungsmittel in seiner umfänglichen Ausrichtung verschoben werden, wäre ein Einkoppeln in die stehende Spindel nicht mehr möglich.

Erst dadurch, dass die Orientierungsmittel nach dem Einspannen des Werkzeughalters in die Werkzeugaufnahme freigegeben werden, ist ein Einsetzen in die stehende Spindel möglich.

In einer Weiterbildung ist es bevorzugt, wenn die Orientierungsmittel durch Verfahren des Greifers gegenüber der Arbeitsspindel den in die Werkzeugaufnahme eingespannten Werkzeughalter freigeben, wobei die Orientierungsmittel vorzugsweise Rastmittel sind.

Diese Maßnahme ist konstruktiv von Vorteil, denn es sind keine Antriebseinheiten oder eine gesonderte Manipulation an dem Greifer erforderlich, um beispielsweise einen Rasthebel zu betätigen.

Dabei ist es weiter bevorzugt, wenn die Orientierungsmittel zumindest einen an dem Greifer vorgesehenen Rastvorsprung umfassen, der einer Orientierungskerbe an dem Werkzeughalter zugeordnet ist.

Hier ist von Vorteil, dass sich ein konstruktiv sehr einfacher Greifer realisieren lässt, an ihm ist lediglich zumindest ein Rastvorsprung vorzusehen. Als Orientierungskerbe an dem Werkzeughalter kann dabei eine standardmäßig vorgesehene Positionskerbe dienen.

Bei einer derartigen Ausgestaltung reicht ein seitliches Verfahren oder ein Absenken des Greifers aus, um die Orientierungsmittel außer Eingriff zu bringen. Diese Maßnahme ist damit nicht nur konstruktiv von Vorteil, sie ermöglicht auch ein Nachrüsten bestehender Werkzeugmaschinen, denn über die Ablaufsteuerung kann die zusätzliche Bewegung des Greifers zur Freigabe der Orientierungsmittel problemlos programmiert werden.

Insgesamt ist es bevorzugt, wenn der Greifer radial nach innen vorspringende Stege aufweist, die in eine Greifernut eingreifen, die umlaufend an einem an dem Werkzeughalter vorgesehenen Bund ausgebildet ist, wobei vorzugsweise in oder in der Nähe der Greifernut die zumindest eine Orientierungskerbe und an dem Steg oder in dessen Nähe der zumindest eine Rastvorsprung vorgesehen ist.

Hier ist von Vorteil, dass standardisierte Werkzeughalter sowie Greifer in üblicher Konstruktion eingesetzt werden können, es ist lediglich erforderlich, an dem Steg den zumindest einen Rastvorsprung vorzusehen. Es ist aber auch möglich, dass die Orientierungskerbe und der Rastvorsprung beliebig am Umfang des Werkzeughalters bzw. der Greiferaufnahme angeordnet sind, solange sie miteinander in Eingriff und wieder außer Eingriff gelangen können.

Weiterhin ist es bevorzugt, wenn der Rastvorsprung bei in die Werkzeugaufnahme eingesetztem Werkzeughalter nach oben auf diese zu und die Orientierungskerbe nach unten weist, wobei vorzugsweise der Rastvorsprung ein auf dem Steg befestigter Nutenstein und die Orientierungskerbe eine Positionskerbe ist.

Hier ist von Vorteil, dass der Greifer nach dem drehfesten Verspannen des Werkzeughalters mit der Werkzeugaufnahme lediglich so weit abgesenkt werden muss, dass der Nutenstein aus der Positionskerbe freikommt.

Dabei ist es weiter bevorzugt, wenn zumindest zwei Werkzeugwechselarme vorgesehen sind, deren Greifer sowohl in Magazinposition als auch in Arbeitsposition an dem Werkzeughalter verbleiben, wobei die Werkzeugwechselarme vorzugsweise an einer gegenüber der Arbeitsspindel längsverschieblich angeordneten Hülse gelagert sind.

Diese Maßnahme ist an sich bekannt, siehe beispielsweise die DE 40 31 997 A1 sowie die DE 33 20 851 A1, auf deren Offenbarung hiermit ausdrücklich Bezug genommen wird.

Der Werkzeugwechsel bei der neuen Werkzeugmaschine gestaltet sich bei dieser Konstruktion besonders einfach. Der Werkzeugwechselarm mit dem einzuwechselnden Werkzeug wird bei nach unten gefahrener Hülse ausgeschwenkt, so dass der Werkzeughalter mit seiner Drehachse fluchtend zur Achse der Arbeitsspindel zu liegen kommt. Die Hülse wird dann nach oben gefahren, wodurch der Werkzeughalter in die Werkzeugaufnahme gelangt. Da die umfängliche Ausrichtung zwischen Werkzeughalter und Arbeitsspindel durch die Orientierungsmittel und die Ablaufsteuerung der Arbeitsspindel festgelegt ist, kann unmittelbar nach dem Hochfahren der Hülse der Werkzeughalter in der Werkzeugaufnahme verspannt werden. Danach wird die Hülse wieder ein kleines Stück abgesenkt, wodurch die Orientierungsmittel außer Eingriff gelangen und der Werkzeughalter verdrehbar ist, obwohl der Greifer am Werkzeughalter verbleibt.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: die neue Werkzeugmaschine in einem ausschnittsweisen Längsschnitt, bei dem sich ein Werkzeugwechselarm in seiner Magazinposition befindet;
- Fig. 2: eine Darstellung wie Fig. 1, jedoch mit in Arbeitsposition befindlichem Werkzeugwechselarm;
- Fig. 3: einen bei der Werkzeugmaschine aus Fig. 1 und 2 verwendeten Greifer in einer Draufsicht und mit geöffneten Backen;
- Fig. 4: einen in den Greifer aus Fig. 3 einzusetzenden HSK-Werkzeughalter in Seitenansicht mit schematisch dargestellter Arbeitsspindel im Bereich der Werkzeugaufnahme;
- Fig. 5: den HSK-Werkzeughalter aus Fig. 4 in einem Längsschnitt längs der Linie V-V aus Fig. 3;
- Fig. 6: den Werkzeughalter aus Fig. 4 in schematischer Seitenansicht mit einem ebenfalls schematisch gezeigten Werkzeugköcher in Schnittdarstellung; und
- Fig. 7: eine kombinierte Darstellung aus den Figuren 5 und 6, jedoch mit einem SK- statt einem HSK-Werkzeughalter.

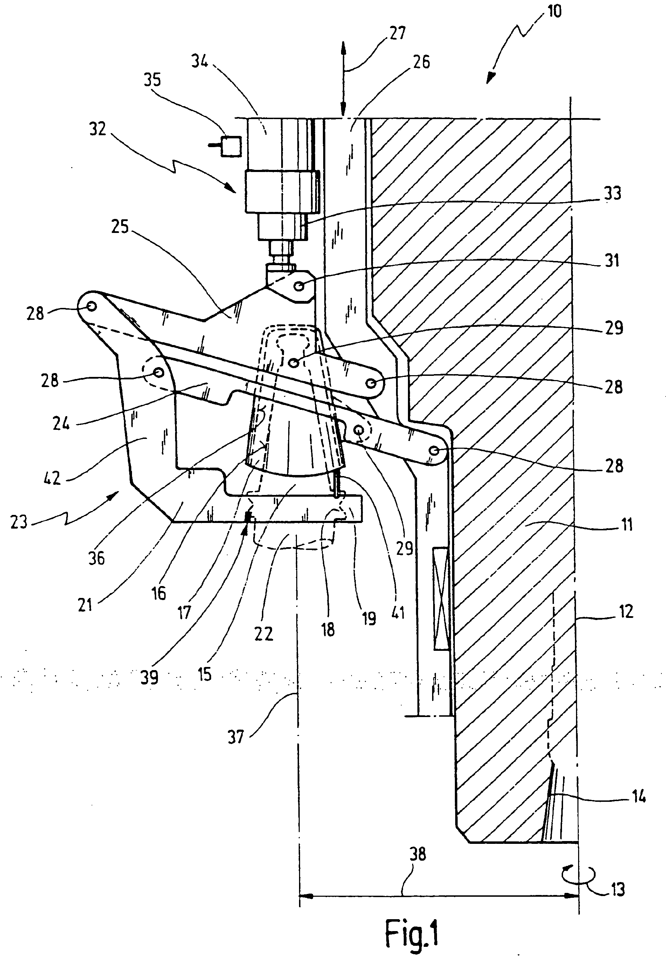

In Fig. 1 ist mit 10 eine Werkzeugmaschine bezeichnet, deren Arbeitsspindel bei 11 ausschnittsweise geschnitten dargestellt ist. Die Arbeitsspindel 11 ist um eine Achse 12 rotierbar gelagert, was durch einen Pfeil 13 angedeutet ist.

Die Arbeitsspindel 11 weist an ihrem unteren Ende eine konische Werkzeugaufnahme 14 auf, in die Werkzeughalter eingesetzt werden können, wie beispielsweise einer bei 15 in seiner Magazinposition gezeigt ist.

Der Werkzeughalter 15 weist einen genormten Steilkegel 16 auf, der von einem Werkzeugköcher 17 vor herumfliegenden Spänen geschützt wird, wie dies allgemein bekannt ist.

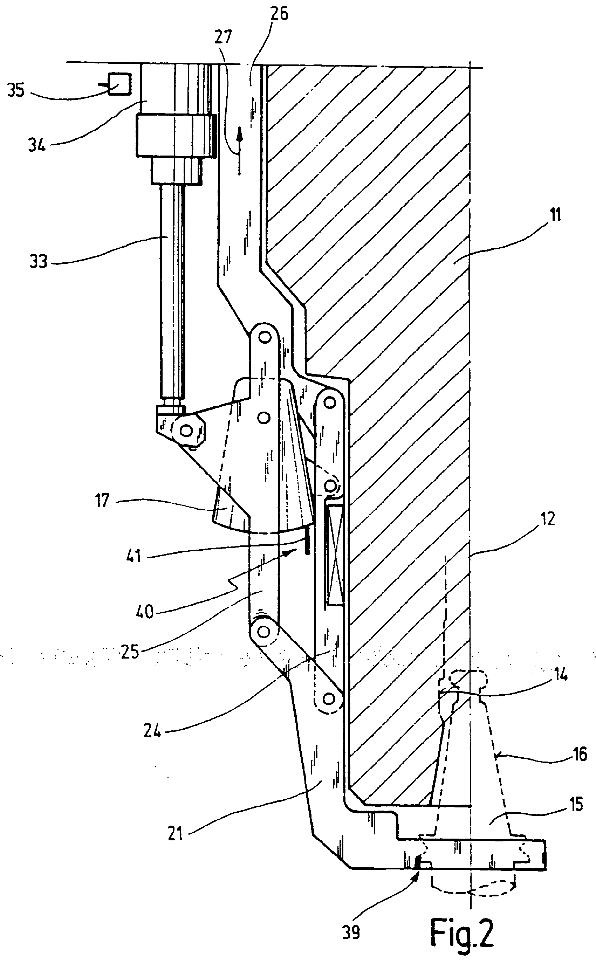

Der Werkzeughalter 15 weist unterhalb des Steilkegels 16 einen verdickten Bund 18 mit einer umlaufenden, nach außen offenen Greifernut 19 auf, an der der Werkzeughalter 15 von einem Greifer 21 gehalten wird. Unten an den verdickten Bund 18 schließt sich bei dem Werkzeughalter 15 noch ein Schaft 22 an, in dem ein in den Figuren 1 und 2 nicht gezeigtes Arbeitswerkzeug gehalten ist.

Der Greifer 21 wird von einem Werkzeugwechselarm 23 gehalten, der in an sich bekannter Weise einen ersten Stab 24 sowie einen zweiten Stab 25 umfasst, über die er an einer Hülse 26 gelagert ist, die höhenverstellbar, was durch einen Pfeil 27 angedeutet ist, an einem die Werkzeugspindel 11 umgebenden, in den Figuren nicht gezeigten Spindelgehäuse gelagert ist. Die beiden Stäbe 24 und 25 sind über Achsen 28 an der Hülse 26 gelagert sowie mit dem Greifer 21 verbunden, so dass eine Parallelogrammführung entsteht, wie dies ebenfalls aus dem Stand der Technik bekannt ist.

Der Werkzeugköcher 17 ist über Achsen 29 mit den Stäben 24 und 25 verbunden. Über eine weitere Achse 31 ist der Stab 25 mit einer Betätigungseinheit 32 aus Kolben 33 und Zylinder 34 verbunden. Die Position des Kolbens 33 in dem Zylinder 34 wird über einen Positionssensor 35 erfasst, der ein Endlagensensor sein kann und angibt, wenn der Kolben 33 so weit in den Zylinder 34 eingefahren wurde, dass der Werkzeugwechselarm 23 und damit der Werkzeughalter 15 seine Magazinposition eingenommen haben, in der der Steilkegel 16 in einem Hohlraum 36 des Werkzeugköchers 17 zu liegen kommt.

Durch die Parallelogrammführung sowie die gelenkige Anordnung des Werkzeugköchers an den Stäben 24 und 25 wird in bekannter Weise dafür gesorgt, dass beim Ausfahren des Kolbens 33 der Werkzeughalter 15 mit seiner Achse 37 parallel zur Drehachse 12 ausgerichtet bleibt und unter die Werkzeugaufnahme 14 geschwenkt werden kann, wozu die Hülse 26 nach unten bewegt werden muss. Wenn die Achsen 12 und 37 miteinander fluchten, wird die Hülse 26 wieder nach oben bewegt, so dass der Werkzeughalter 15 seine in Fig. 2 gezeigte Arbeitsposition einnimmt, in der der Steilkegel 16 in der Werkzeugaufnahme 14 sitzt und dort in bekannter Weise verspannt wird.

Es sind jedoch auch Konstruktionen denkbar, bei denen die Achse 37 in der Magazinstellung geneigt ist, so dass die Werkzeuge radial nach außen zeigen.

In Fig. 1 ist noch zu erkennen, dass der Werkzeughalter 15 in seiner Magazinposition um einen Abstand 38 seitlich zur Werkzeugaufnahme 14 versetzt ist, wobei die Magazinposition auch oberhalb der Werkzeugaufnahme 14 angeordnet ist.

Bei einer derartigen Werkzeugmaschine, wie sie beispielsweise aus der DE 40 31 997 A1 bekannt ist, sind mehrere Werkzeugwechselarme an der Hülse 26 um die Arbeitsspindel 11 herum angeordnet, wobei die Greifer 21 im Gegentaktbetrieb jeweils einen Werkzeughalter 15 in die Werkzeugaufnahme 14 transportieren und während des Bearbeitungsvorgangs an dem Werkzeughalter 15 verbleiben.

Zwischen dem Werkzeughalter 15 und dem Greifer 21 sind bei 39 angedeutete Orientierungsmittel vorgesehen, die den Werkzeughalter beim Überführen zwischen der Magazin- und der Arbeitsposition unverdrehbar an dem Greifer 21 festlegen und den Werkzeughalter 15 erst nach dessen Einspannen in die Werkzeugaufnahme 14 freigeben, so dass er durch Drehen der Arbeitsspindel 11 gegenüber dem Greifer 21 verdreht werden kann.

In noch näher zu beschreibender Weise erfolgt die Freigabe der Orientierungsmittel 39 dadurch, dass die Hülse 26 aus der in Fig. 2 gezeigten Position um einen kleinen Betrag nach unten abgesenkt wird.

In Fig. 2 ist bei 40 ein Sperrelement bezeichnet, das in den Ausführungsbeispielen der Figuren 1 und 2 ein Rastelement 41 ist. Das Sperrelement 40 verhindert in noch zu beschreibender Weise, dass der Werkzeughalter 15 bei umfänglicher Fehlausrichtung zu dem Greifer 21 seine Magazinposition einnimmt. Zu diesem Zweck greift das Rastelement 41 bei dem Ausführungsbeispiel der Figuren 1 und 2 in eine an dem Bund 18 vorgesehene Ausnehmung ein. Ist der Werkzeughalter 15 gegenüber dem Greifer 21 verdreht, kann das Rastelement 41 nicht in diese Ausnehmung eingreifen, so dass der Greifer 21 nicht weit genug nach oben gefahren werden kann, damit der Werkzeugwechselarm seine in Fig. 1 gezeigte Magazinposition einnimmt. Dieses Abweichen von der Magazinposition wird durch den Positionssensor 35 erkannt, der diesen Fehler an die Ablaufsteuerung der Werkzeugmaschine 10 meldet.

Der Positionssensor 35 sowie das Sperrelement 40 bilden damit eine Lagekontrolle für die umfängliche Ausrichtung des Werkzeughalters 15 an dem Greifer 21. Diese Lagekontrolle erkennt damit nicht nur, wenn ein aus der Werkzeugaufnahme 14 ausgewechselter Werkzeughalter 15 beim Beschleunigen und Abbremsen des Greifers 21 verdreht oder verkippt wird, was die Orientierungsmittel 39 beispielsweise deshalb nicht verhindern konnten, weil sie durch Späne oder Kühlmittel verdreckt sind. Auch beim Bestücken des Greifers 21 mit einem Werkzeughalter 15 wird eine mögliche Fehlausrichtung unmittelbar dann erkannt, wenn der zum Zwecke der Bestückung ausgefahrene Werkzeugwechselarm 23 in die Magazinposition zurückkehrt.

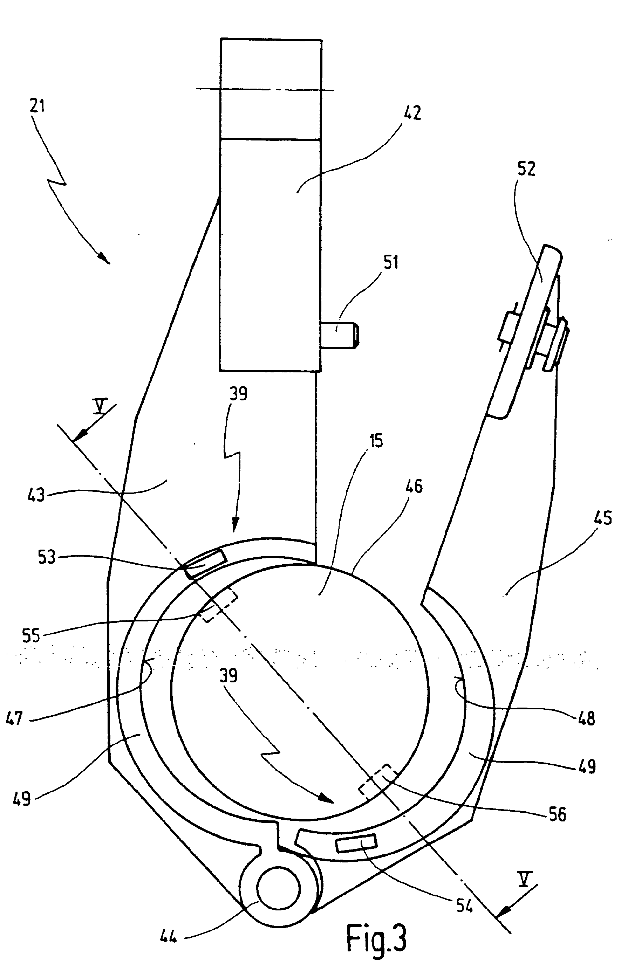

Die Orientierungsmittel werden jetzt im Zusammenhang mit der Fig. 3 näher erläutert, die eine Draufsicht auf den Greifer 21 aus den Figuren 1 und 2 zeigt.

Der Greifer 21 ist über einen Arm 42 mit den Stäben 24 und 25 verbunden, an dem eine erste Backe 43 sitzt, die über eine Achse 44 mit einer zweiten, klappbaren Backe 45 verbunden ist. Die beiden Backen 43 und 45 weisen eine an die bei 46 angedeutete Außenkontur des Werkzeughalters 15 angepasste halbkreisförmige Öffnung 47 bzw. 48 auf, in die ein radial nach innen vorspringender Steg 49 hineinragt, der in die in Fig. 3 nicht gezeigte Greifernut 19 eingreift, wie dies allgemein bekannt ist.

Zum Bestücken wird der Greifer 21 so geöffnet, wie dies in Fig. 3 gezeigt ist, danach wird ein Werkzeughalter eingelegt und die Backe 45 wird über einen Stift 51 und einen Verschluss 52 nach dem Verschließen an der Backe 43 verriegelt.

Der Werkzeughalter 15 ist jetzt unverlierbar in dem Greifer 21 gelagert.

Auf dem Steg 49 sind einander diametral gegenüberliegend zwei Rastvorsprünge 53 und 54 angeordnet, die im gezeigten Beispiel zwei Nutensteine sind, die auf den Steg 49 aufgeschraubt wurden. Auf die Darstellung der Schrauben wurde aus Übersichtlichkeitsgründen verzichtet, wobei die Nutensteine auch stoffschlüssig, also beispielsweise geklebt oder gelötet, oder kraft- bzw. formschlüssig, also beispielsweise geklemmt befestigt sein können.

Den Rastvorsprüngen 53 und 54 sind Orientierungskerben 55 und 56 an dem Werkzeughalter 15 zugeordnet, die nach unten aus der Zeichnungsebene der Fig. 3 heraus offen sind. Auf diese Weise wird der Werkzeughalter 15 sozusagen von oben so auf die Rastvorsprünge 53, 54 aufgesetzt, dass diese in die Orientierungskerben 55, 56 eingreifen und den Werkzeughalter 15 unverdrehbar in dem Greifer 21 halten.

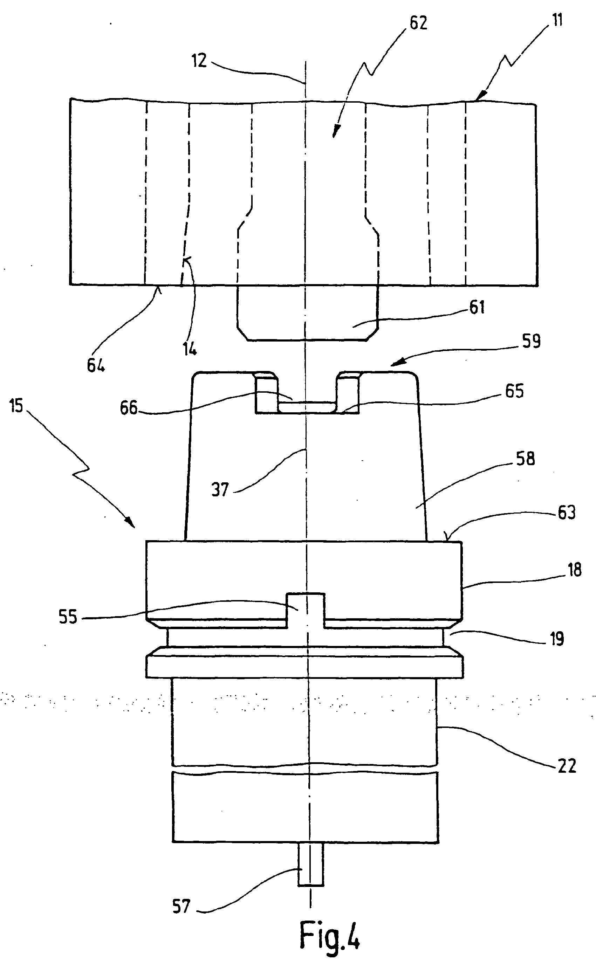

Der Werkzeughalter 15 aus Fig. 3 ist ein sogenannter Kegel-Hohlschaft-Werkzeughalter (HSK), was sich aus der Seitenansicht der Fig. 4 ergibt, die Orientierungsmittel wirken jedoch bei einem Steilkegel-Werkzeughalter (SK), wie er in Figuren 1 und 2 schematisch gezeigt ist, auf dieselbe Weise, wie es jetzt nachstehend für den HSK-Werkzeughalter erläutert wird.

In Fig. 4 ist zu erkennen, dass die Orientierungskerbe 55 nach unten offen an dem Bund 18 ausgebildet ist. Ferner ist in Fig. 4 ein Bearbeitungswerkzeug 57 gezeigt, das an dem Schaft 22 befestigt ist.

Der Werkzeughalter 15 weist einen Kegel-Hohlschaft 58 auf, in dessen nach oben weisende Öffnung 59 ein Zugkegel 61 eines Spannsystems 62 eingreift, wie dies in Fig. 4 oben schematisch gezeigt ist. Beim Einfahren des Werkzeughalters 15 in die Werkzeugaufnahme 14 gelangt der Zugkegel 61 in den Kegel-Hohlschaft 58, verspreizt sich und zieht dabei den Werkzeughalter 15 weiter in die Werkzeugaufnahme 14 hinein. Dabei gelangt der Bund 18 mit seiner Ringfläche 63 in Anlage mit einer Stirnfläche 64 der Arbeitsspindel 11. Durch die Plananlage zwischen Ringfläche 63 und Stirnfläche 64 wird für eine fluchtende Ausrichtung zwischen der Achse 12 der Arbeitsspindel 11 sowie der Achse 37 des Werkzeughalters 15 gesorgt.

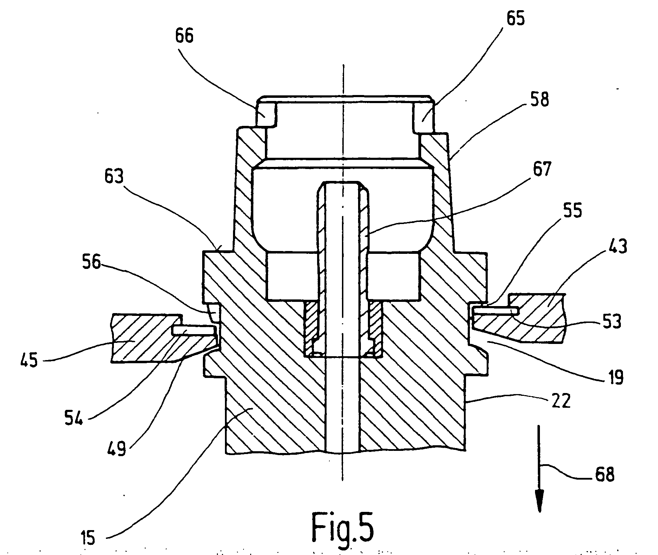

Die umfängliche Ausrichtung zwischen Arbeitsspindel 11 und Werkzeughalter 15 wird über zwei Mitnehmernuten 65 und 66 kontrolliert, wobei die Mitnehmernut 65 weiter nach unten ausgeschnitten ist als die Mitnehmernut 66, was besonders gut in der Schnittdarstellung der Fig. 5 zu erkennen ist. Fig. 5 zeigt ferner noch ein Kühlmittelröhrchen 67, das innen im Werkzeughalter 15 angeordnet ist und für eine Verbindung des Kühlsystems in der Arbeitsspindel 11 zu dem Werkzeug 57 sorgt.

In der Schnittdarstellung der Fig. 5 sind die Orientierungskerben 55 und 56 gezeigt, wobei längs der Linie V-V aus Fig. 3 geschnitten auch der Greifer 21 bzw. seine Backen 43 und 45 mit den Rastvorsprüngen 53 und 54 angedeutet sind. In Fig. 5 rechts ist der Greifer 21 noch in seiner oberen Position, in der der Rastvorsprung 53 in die Orientierungskerbe 55 eingreift, so dass der Werkzeughalter 15 nicht verdreht werden kann. Dies ist die Position, in der der Werkzeughalter 15 in die Werkzeugaufnahme 14 eingeführt und dort verspannt wird. Danach wird der Greifer 21 durch Absenken der Hülse 26 abgesenkt, was in Fig. 5 links dargestellt ist, wo der Rastvorsprung 54 aus der Orientierungskerbe 56 freigekommen ist. Die Orientierungskerben 55, 56 sind Positionskerben, die umfänglich der Schneidenstellung des Bearbeitungswerkzeugs 57 zugeordnet sind.

Beim Überführen zwischen der Magazin- und der Arbeitsposition liegt der Werkzeughalter 15 durch sein Eigengewicht auf dem in die Greifernut 19 hineinragenden Steg 49 auf, wobei die Rastvorsprünge 53 und 54 in Eingriff mit den Orientierungskerben 55 und 56 sind, so dass der Werkzeughalter 15 gegenüber dem Greifer 21 nicht verdreht werden kann. Nach dem Einspannen des Werkzeughalters 15 in die Werkzeugaufnahme 14 wird der Greifer 21 abgesenkt, was durch einen Pfeil 68 in Fig. 5 angedeutet ist. Dies kann entweder - wie gesagt - durch Absenken der Hülse 26 erfolgen oder aber durch weiteres Ausfahren des Werkzeugwechselarms 23. Auf diese Weise geben die Orientierungsmittel den Werkzeughalter 15 zur Verdrehung gegenüber dem Greifer 21 frei.

Nach der Beendigung des Einsatzes des Werkzeugs 57 wird die Arbeitsspindel 11 bis zum Stillstand abgebremst und danach der Greifer 21 wieder hochgefahren. Der Werkzeughalter 15 wird dabei bezüglich seiner Umfangslage so ausgerichtet, dass die Rastvorsprünge 53 und 54 in die Orientierungskerben 55 und 56 eingreifen. Jetzt wird die Hülse 26 abgesenkt, so dass der Werkzeughalter 15 aus der Werkzeugaufnahme 14 freikommt. Danach wird der Werkzeugwechselarm in die Magazinposition geschwenkt, die in Fig. 1 gezeigt ist, und ein anderer Werkzeugwechselarm fährt aus, um ein neues, von einem Werkzeughalter getragenes Werkzeug in die Arbeitsspindel 11 einzuspannen.

Dieser Werkzeugwechsel erfolgt mit hohen Beschleunigungen, so dass eine wenn auch geringe Gefahr besteht, dass der Werkzeughalter 15 aus den Orientierungsmitteln herausspringt, sich also verkippt oder umfänglich verdreht. Dies kann insbesondere dann geschehen, wenn sich Späne und Kühlmittel in den Orientierungskerben 55 und 56 bzw. auf den Rastvorsprüngen 53 und 54 abgelagert haben.

Wenn diese mögliche Fehlausrichtung nicht erkannt würde, würde der Werkzeughalter 15 bei seinem nächsten Einsatz nicht lagerichtig in die Arbeitsspindel 11 eingesetzt, so dass er gegebenenfalls nicht eingespannt werden könnte, wobei ferner Schäden an dem Spannsystem nicht auszuschließen sind.

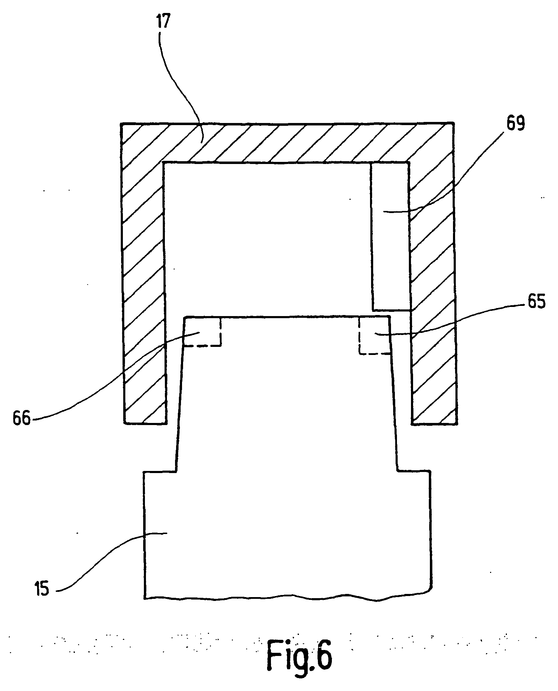

Um dies zu verhindern, ist die bereits im Zusammenhang mit den Figuren 1 und 2 diskutierte Lagekontrolle vorgesehen. Während das Rastelement 41 bei den Figuren 1 und 2 nach unten aus dem Werkzeugköcher 17 vorsteht, ist es bei dem in Fig. 6 schematisch und im Schnitt angedeuteten Werkzeugköcher 17 als Rastelement 69 innen im Werkzeugköcher 17 angeordnet. Das Rastelement 69 ist als Formelement einstückig mit dem Werkzeugköcher 17 ausgebildet.

In Fig. 6 ist ferner schematisch ein HSK-Werkzeughalter 15 mit seinen Mitnehmernuten 65 und 66 gezeigt. Die Mitnehmernut 65 ist tiefer ausgebildet als die Mitnehmernut 66, so dass der Werkzeughalter 15 seine Magazinposition in dem Köcher 17 nur dann einnehmen kann, wenn das Rastelement 69 in die tiefere Mitnehmernut 65 eingreift. Wenn der Werkzeughalter 15 in dem Greifer 21 verdreht ist, stößt das Rastelement 69 entweder auf der Stirnseite des Werkzeughalters 15 auf, oder es gelangt bei einer Verdrehung um 180° in die nicht hinreichend tiefe zweite Mitnehmernut 66. In beiden Fällen erreicht der Werkzeughalter 15 seine Magazinposition nicht, was im Umkehrschluss bedeutet, dass auch der Werkzeugwechselarm 23 aus Fig. 1 seine Magazinposition nicht einnehmen kann, was wiederum durch den Positionssensor 35 erkannt wird.

Die durch den Positionssensor 35 sowie das Rastelement 41 bzw. 69 gebildete Lagekontrolle dient somit nicht nur dazu, einen in einer falschen Orientierung von einer Bedienungsperson in den Greifer 21 eingelegten Werkzeughalter 15 zu identifizieren, sie verhindert auch während des Betriebs der neuen Werkzeugmaschine 10, dass ein falsch ausgerichteter Werkzeughalter 15 in die Werkzeugaufnahme 14 eingeführt wird, wo er nicht verspannt werden kann und gegebenenfalls sogar zu einem Schaden am Spannsystem sorgt.

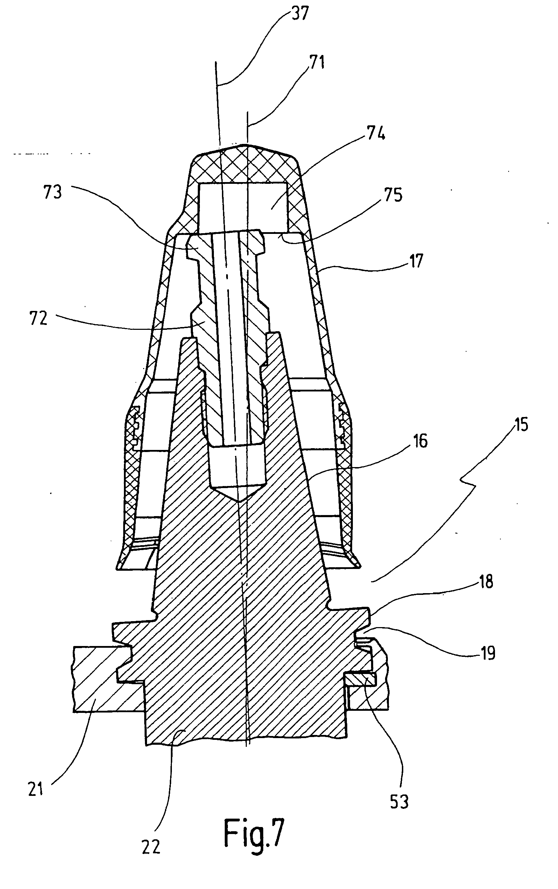

Obwohl die Erfindung in den Figuren 4 bis 6 anhand eines HSK-Werkzeughalters beschrieben wurde, ist sie auch für einen SK-Werkzeughalter oder andere Werkzeughalter einsetzbar. In Fig. 7 ist eine kombinierte Darstellung aus den Figuren 5 und 6 gezeigt, jedoch für einen SK-Werkzeughalter. In der Fig. 7 werden für gleiche Elemente die gleichen Bezugszeichen wie in den Figuren 4 bis 6 verwendet.

Ein wesentlicher Unterschied zwischen einem HSK- und einem SK-Werkzeughalter 15 besteht darin, dass die in Fig. 5 gezeigten Mitnehmernuten 65 und 66 bei dem SK-Werkzeughalter an dem Bund 18 angeordnet sind, in Fig. 7 sind sie jedoch der Übersichtlichkeit halber nicht dargestellt. Ein weiterer Unterschied besteht zwischen dem in den Figuren 4 bis 6 gezeigten HSK-Werkzeughalter 15 und dem in Fig. 7 gezeigten SK-Werkzeughalter 15 darin, dass von den in Fig. 3 gezeigten Orientierungskerben 55 und 56 nur eine Orientierungskerbe vorgesehen ist, weshalb an dem Greifer 21 auch nur ein Rastvorsprung 53, also ein Nutenstein vorgesehen ist. Die Orientierungskerbe 55 ist in der Fig. 7 nicht zu erkennen, da der Werkzeughalter 15 nicht lagerichtig in den Greifer 21 eingesetzt ist.

Diese verdrehte Aufnahme des Werkzeughalters 15 in dem Greifer 21 führt dazu, dass die Längsachse 37 des Werkzeughalters 15 nicht mit der Längsachse 71 des Werkzeugköchers 17 fluchtet, sondern gegenüber dieser in Fig. 7 nach links verkippt ist.

Ein weiterer Unterschied zwischen einem HSK-Werkzeughalter und einem SK-Werkzeughalter besteht darin, dass der Steilkegel 16 nicht als Kegel-Hohlschaft 58 ausgebildet ist, in den ein Zugkegel eines Spannsystems eingreift, sondern dass in das obere Ende des Steilkegels 16 ein Zugbolzen 72 eingeschraubt ist, an dessen Kopf 73 das Spannsystem 62 aus Fig. 4 angreift, es verspreizt sich jedoch nicht, sondern erfasst den Kopf 73.

Als Sperrelement 40 ist oben in dem Werkzeugköcher 17 jetzt eine Ausnehmung 74 vorgesehen, in die der Kopf 73 des Zugbolzens 72 dann eingreift, wenn die Längsachsen 37 und 71 miteinander fluchten, der Werkzeughalter 15 also lagerichtig in den Greifer 21 eingesetzt wurde. Nur in dieser Winkellage kann der Werkzeughalter 15 vollständig in den Werkzeugköcher 17 aufgenommen werden, was durch den bereits mehrfach erwähnten Positionssensor 35 erkannt wird.

Ist der Werkzeughalter 15 gegenüber dem Greifer 21 verdreht, so wie es in Fig. 7 gezeigt ist, ist der Kopf 37 so weit verkippt, dass er nicht in die Ausnehmung 74 hineingelangen kann, sondern gegen eine Stirnfläche 75 stösst. Der Werkzeughalter 15 kann somit nicht vollständig in den Werkzeugköcher 17 hineingelangen, was ebenfalls von dem bereits erwähnten Positionssensor 35 erkannt wird.

Selbstverständlich ist es auch möglich, bei einem HSK-Werkzeughalter nur eine Orientierungskerbe 55 vorzusehen, so dass er bei Fehlausrichtung so verkippt wie der SK-Werkzeughalter in Fig. 7. In dem Werkzeugköcher 17 aus Fig. 6 wird dann eine der Ausnehmung 74 aus Fig. 7 entsprechende Ausnehmung vorgesehen, in die der Kegel-Hohlschaft 58 des HSK-Werkzeughalters aus Fig. 4 dann eingreifen kann, wenn die Längsachsen von Werkzeugköcher 17 und Werkzeughalter 15 miteinander fluchten.

Bei dem Ausführungsbeispiel der Fig. 7 wirkt der Kopf 73 des Zugbolzens 72 also als Vorsprung, der in die Ausnehmung 74 eingreift. Selbstverständlich ist es möglich, an dem Werkzeughalter 15 einen Vorsprung an einer anderen Stelle vorzusehen, der mit einer entsprechenden Ausnehmung an dem Werkzeugköcher 17 zusammenwirkt.

Bei der insoweit beschriebenen Werkzeugmaschine sorgen also die zwischen dem Werkzeughalter 15 und dem Greifer 21 vorgesehenen Orientierungsmittel dafür, dass der Werkzeughalter 15 in richtiger umfänglicher Ausrichtung in die stehende Arbeitsspindel 11 eingeführt und dort sofort eingespannt werden kann. Durch Absenken des Greifers 21 werden die Orientierungsmittel freigegeben, so dass die Arbeitsspindel auf Betriebsdrehzahl hochfahren kann.

Die aus Positionssensor 35 und Rastelement 41 bzw. 69 oder Ausnehmung 74 gebildete Lagekontrolle überwacht die umfängliche Ausrichtung der Werkzeughalter 15 in ihrer Magazinposition, so dass sowohl ein falsches Bestücken eines Greifers 21 als auch ein Verdrehen oder Verkippen des Werkzeughalters 15 im Betrieb erkannt werden kann. Dabei ist es nicht zwingend erforderlich, dass der Lagekontrolle der Positionssensor 35 zugeordnet wird, es ist auch möglich, einen gesonderten Positionssensor in dem Werkzeugköcher anzubringen, so dass gegebenenfalls auch auf die Rastelemente 41 bzw. 69 oder die Ausnehmung 74 verzichtet werden kann.

## Patentansprüche

1. Werkzeugmaschine mit zumindest einer Arbeitsspindel (11), in der eine Werkzeugaufnahme (14) für Werkzeughalter (15) vorgesehen ist, und zumindest einem Werkzeugwechselarm (23) mit einem Greifer (21), in dem ein Werkzeughalter (15) in einer zu dem Greifer (21) umfänglichen Ausrichtung gehalten wird, um diesen Werkzeughalter (15) zwischen seiner von der Werkzeugaufnahme (14) beabstandeten Magazinposition und seiner Arbeitsposition zu überführen, in der der Werkzeughalter (15) in die Werkzeugaufnahme (14) einspannbar ist,
**dadurch gekennzeichnet, dass** eine Lagekontrolle (35, 40) für die umfängliche Ausrichtung des Werkzeughalters (15) vorgesehen ist, die eine Fehlausrichtung zwischen Werkzeughalter (15) und Greifer (21) meldet.

2. Werkzeugmaschine nach Anspruch 1, **dadurch gekennzeichnet, dass** die Lagekontrolle (35, 40) bei in Magazinposition befindlichem Werkzeughalter (15) eine Fehlausrichtung erkennt.

3. Werkzeugmaschine nach Anspruch 1 oder 2, **dadurch gekennzeichnet, dass** der Lagekontrolle (35, 40) ein Positionssensor (40) zugeordnet ist, der die umfängliche Ausrichtung des Werkzeughalters (15) zu dem Greifer (21) erkennt.

4. Werkzeugmaschine nach einem der Ansprüche 1 bis 3, **dadurch gekennzeichnet, dass** die Lagekontrolle (35, 40) einem an dem Werkzeugwechselarm (23) angeordneten Werkzeugköcher (17) zugeordnet ist, von dem der Werkzeughalter (15) in seiner Magazinposition zumindest teilweise abgedeckt ist.

5. Werkzeugmaschine nach Anspruch 4, **dadurch gekennzeichnet, dass** der Lagekontrolle (35, 40) ein Positionssensor (35) zugeordnet ist, der erkennt, ob der Werkzeughalter (15) die Magazinposition in dem Werkzeugköcher (17) erreicht hat.

6. Werkzeugmaschine nach Anspruch 5, **dadurch gekennzeichnet, dass** der Positionssensor (35) ein Endlagensensor ist, der meldet, wenn der Werkzeughalter (15) seine vorbestimmte Magazinposition in dem Werkzeugköcher (17) nicht erreicht.

7. Werkzeugmaschine nach einem der Ansprüche 3 bis 6, **dadurch gekennzeichnet, dass** der Positionssensor (35) an einer Betätigungseinheit (32) für den Werkzeugwechselarm (23) angeordnet ist.

8. Werkzeugmaschine nach Anspruch 7, **dadurch gekennzeichnet, dass** der Positionssensor (35) ein Endlagensensor ist, der meldet, ob der Werkzeugwechselarm (23) seine vorbestimmte Stellung für die Magazinposition eingenommen hat.

9. Werkzeugmaschine nach einem der Ansprüche 1 bis 8, **dadurch gekennzeichnet, dass** der Lagekontrolle (35, 40) ein Sperrelement (40) zugeordnet ist, das verhindert, dass der Werkzeughalter (15) bei Fehlausrichtung zu dem Greifer (21) seine Magazinposition einnimmt.

10. Werkzeugmaschine nach Anspruch 9, **dadurch gekennzeichnet, dass** das Sperrelement (40) ein an dem Werkzeugköcher (17) angeordnetes Rastelement (41, 69) umfasst, dem eine Vertiefung an dem Werkzeughalter (15) zugeordnet ist.

11. Werkzeugmaschine nach Anspruch 10, **dadurch gekennzeichnet, dass** das Rastelement (69) in dem Werkzeugköcher (17) angeordnet ist und bei lagerichtig in dem Greifer (21) gehaltenen Werkzeughalter (17) in eine an dem Werkzeughalter (17) ausgebildete Mitnehmernut (65) eingreift.

12. Werkzeugmaschine nach Anspruch 11, **dadurch gekennzeichnet, dass** das Rastelement (69) ein einstückig mit dem Werkzeugköcher (17) ausgebildetes Formelement ist.

13. Werkzeugmaschine nach Anspruch 9, **dadurch gekennzeichnet, dass** das Sperrelement (40) eine an dem Werkzeugköcher (17) vorgesehene Ausnehmung (74) umfasst, der ein Vorsprung (73) an dem Werkzeughalter (50) zugeordnet ist.

14. Werkzeugmaschine nach einem der Ansprüche 1 bis 13, **dadurch gekennzeichnet, dass** zwischen dem Greifer (21) und dem von ihm getragenen Werkzeughalter (15) Orientierungsmittel (39) vorgesehen sind, die den Werkzeughalter (15) zumindest beim Überführen zwischen der Magazin- und der Arbeitsposition unverdrehbar an dem Greifer (21) festlegen.

15. Werkzeugmaschine nach Anspruch 14, **dadurch gekennzeichnet, dass** die Orientierungsmittel (39) den Werkzeughalter (17) nach dessen Einspannen in die Werkzeugaufnahme (14) freigeben, so dass er gegenüber dem Greifer (21) verdrehbar ist.

16. Werkzeugmaschine nach Anspruch 15, **dadurch gekennzeichnet, dass** die Orientierungsmittel (39) durch Verfahren des Greifers (21) gegenüber der Arbeitsspindel (11) den in die Werkzeugaufnahme (14) eingespannten Werkzeughalter (15) freigeben.

17. Werkzeugmaschine nach Anspruch 15 oder 16, **dadurch gekennzeichnet, dass** die Orientierungsmittel (39) Rastmittel sind.

18. Werkzeugmaschine nach einem der Ansprüche 15 bis 17, **dadurch gekennzeichnet, dass** die Orientierungsmittel (39) zumindest einen an dem Greifer (21) vorgesehenen Rastvorsprung (53, 54) umfassen, der einer Orientierungskerbe (55, 56) an dem Werkzeughalter (15) zugeordnet ist.

19. Werkzeugmaschine nach einem der Ansprüche 15 bis 18, **dadurch gekennzeichnet, dass** der Greifer (21) radial nach innen vorspringende Stege (49) aufweist, die in eine Greifernut (19) eingreifen, die umlaufend an einem an dem Werkzeughalter (15) vorgesehenen Bund (18) ausgebildet ist.

20. Werkzeugmaschine nach Anspruch 18 und 19, **dadurch gekennzeichnet, dass** in oder in der Nähe der Greifernut (18) die zumindest eine Orientierungskerbe (55, 56) und an dem Steg (49) oder in dessen Nähe der zumindest eine Rastvorsprung (53, 54) vorgesehen ist.

21. Werkzeugmaschine nach Anspruch 20, **dadurch gekennzeichnet, dass** der Rastvorsprung (53, 54) bei in die Werkzeugaufnahme (14) eingesetztem Werkzeughalter (15) nach oben auf diese zu und die Orientierungskerbe (55, 56) nach unten weist.

22. Werkzeugmaschine nach Anspruch 20 oder 21, **dadurch gekennzeichnet, dass** der Rastvorsprung (53, 54) ein auf dem Steg (49) befestigter Nutenstein und die Orientierungskerbe (55, 56) eine Positionskerbe ist.

23. Werkzeugmaschine nach einem der Ansprüche 1 bis 22, **dadurch gekennzeichnet, dass** zumindest zwei Werkzeugwechselarme (23) vorgesehen sind, deren Greifer (21) sowohl in Magazinposition als auch in Arbeitsposition an dem Werkzeughalter (15) verbleiben, wobei die Werkzeugwechselarme (23) vorzugsweise an einer gegenüber der Arbeitsspindel (11) längsverschieblich angeordneten Hülse (26) gelagert sind.

## Claims

1. Machine tool having at least one working spindle (11), in which working spindle a tool receptacle (14) for tool holders (15) is provided, and having at least one tool-changing arm (23) with a gripper (21), in which gripper a tool holder (15) is held in a peripheral alignment with respect to the gripper (21) in order to transfer this tool holder (15) between its magazine position, which is spaced apart from the tool receptacle (14), and its working position, in which the tool holder (15) can be clamped into the tool receptacle (14),
**characterized in that** a positioning indicator (35, 40) is provided for the peripheral alignment of the tool holder (15), the indicator indicating a misalignment between the tool holder (15) and gripper (21).

2. Machine tool according to claim 1, **characterized in that** the positioning indicator (35, 40) recognizes a misalignment when the tool holder (15) is in the magazine position.

3. Machine tool according to claim 1 or 2, **characterized in that** the positioning indicator (35, 40) is assigned a position sensor (40) which recognizes the peripheral alignment of the tool holder (15) with respect to the gripper (21).

4. Machine tool according to anyone of claims 1 to 3, **characterized in that** the positioning indicator (35, 40) is assigned to a tool sheath (17) which is arranged on the tool-changing arm (23) and by which the tool holder (15) is at least partially covered in its magazine position.

5. Machine tool according to claim 4, **characterized in that** the positioning indicator (35, 40) is assigned a position sensor (35) which recognizes whether the tool holder (15) has reached the magazine position in the tool sheath (17).

6. Machine tool according to claim 5, **characterized in that** the position sensor (35) is an end-position sensor which indicates if the tool holder (15) does not reach its predetermined magazine position in the tool sheath (17).

7. Machine tool according to anyone of claims 3 to 6, **characterized in that** the position sensor (35) is arranged on an actuating unit (32) for the tool-changing arm (23).

8. Machine tool according to claim 7, **characterized in that** the position sensor (35) is an end-position sensor which indicates whether the tool-changing arm (23) has taken up its predetermined position for the magazine position.

9. Machine tool according to anyone of claims 1 to 8, **characterized in that** the positioning indicator (35, 40) is assigned a blocking element (40) which prevents the tool holder (15) from taking up its magazine position when it is misaligned with respect to the gripper (21).

10. Machine tool according to claim 9, **characterized in that** the blocking element (40) comprises a latching element (41, 69) which is arranged on the tool sheath (17) and is assigned a depression on the tool holder (15).

11. Machine tool according to claim 10, **characterized in that** the latching element (69) is arranged in the tool sheath (17) and, when the tool holder (17) is held in a positionally correct manner in the gripper (21), engages in a catch slot (65) formed on the tool holder (17).

12. Machine tool according to claim 11, **characterized in that** the latching element (69) is a shaped element formed integrally with the tool sheath (17).

13. Machine tool according to claim 9, **characterized in that** the blocking element (40) comprises a recess (74) provided at the tool sheath (17) and assigned to a protrusion (73) at the tool holder (15).

14. Machine tool according to anyone of claims 1 to 13, **characterized in that** orientation means (39) are provided between the gripper (21) and the tool holder (15) supported by it, which orientation means secure the tool holder (15) in a nonrotatable manner on the gripper (21) at least during its transfer between the magazine position and the working position.

15. Machine tool according to claim 14, **characterized in that** the orientation means (39) release the tool holder (17) after it has been clamped into the tool receptacle (14), such that it can be rotated in relation to the gripper (21).

16. Machine tool according to claim 15, **characterized in that** the orientation means (39) release the tool holder (15), which is clamped into the tool receptacle (14), by moving the gripper (21) in relation to the working spindle (11).

17. Machine tool according to claim 15 or 16, **characterized in that** the orientation means (39) are latching means.

18. Machine tool according to anyone of claims 15 to 17, **characterized in that** the orientation means (39) comprise at least one latching projection (53, 54) which is provided on the gripper (21) and is assigned to an orientation notch (55, 56) on the tool holder (15).

19. Machine tool according to anyone of claims 15 to 18, **characterized in that** the gripper (21) has webs (49) which project radially inwards and engage in a gripper groove (19) which is formed in an encircling manner on a collar (18) provided on the tool holder (15).

20. Machine tool according to claim 18 and 19, **characterized in that** the at least one orientation notch (55, 56) is provided in or in the vicinity of the gripper groove (18) and the at least one latching projection (53, 54) is provided on the web (49) or in its vicinity.

21. Machine tool according to claim 20, **characterized in that** the latching projection (53, 54) points upwards towards the tool receptacle (14) and the orientation notch (55, 56) points downwards, when the tool holder (15) is inserted into the tool receptacle (14).

22. Machine tool according to claim 20 or 21, **characterized in that** the latching projection (53, 54) is a sliding block fastened on the web (49) and the orientation notch (55, 56) is a positioning notch.

23. Machine tool according to anyone of claims 1 to 22, **characterized in that** at least two tool-changing arms (23) are provided, the grippers (21) of which remain on the tool holder (15) both in the magazine position and also in the working position, the tool-changing arms (23) preferably being mounted on a sleeve (26) arranged in a longitudinally displaceable manner with respect to the working spindle (11).

## Revendications

1. Machine-outil avec au moins une broche porte-outil (11), dans laquelle il est prévu un raccordement d'outil (14) pour un porte-outil (15) et avec au moins un bras changeur d'outil (23) avec un preneur (21), dans lequel porte d'outil (15) est maintenu dans une orientation tangentielle par rapport au preneur (21), pour transférer ledit porte-outil (15) entre sa position de magasin à distance du raccordement d'outil (14) et sa position de travail, dans laquelle le porte-outil (15) peut être serré dans le raccordement d'outil (14),
**caractérisée en ce qu'**il est prévu un contrôle de position (35, 40) pour l'orientation tangentielle du porte-outil (15), qui signale un défaut d'orientation entre le porte-outil (15) et le preneur (21).

2. Machine-outil selon la revendication 1, **caractérisée en ce que** le contrôle de position (35, 40) identifie un défaut d'orientation lorsque le porte-outil (15) se trouve en position de magasin.

3. Machine-outil selon la revendication 1 ou 2, **caractérisée en ce qu'**un capteur de position (40) qui identifie l'orientation tangentielle du porte-outil (15) par rapport au preneur (21) est associé au contrôle de position (35, 40).

4. Machine-outil selon l'une des revendications 1 à 3, **caractérisée en ce que** le contrôle de position (35, 40) est associé à un carquois à outils (17) disposé sur le bras changeur d'outil (23), carquois par lequel le porte-outil (15) est au moins partiellement recouvert dans sa position de magasin.

5. Machine-outil selon la revendication 4, **caractérisée en ce qu'**un capteur de position (35) qui identifie si le porte-outil (15) a atteint la position de magasin dans le carquois à outils (17) est associé au contrôle de position (35, 40).

6. Machine-outil selon la revendication 5, **caractérisée en ce que** le capteur de position (35) est un capteur de fin de course, qui signale lorsque le porte-outil (15) n'atteint pas sa position de magasin prédéfinie dans le carquois à outils (17).

7. Machine-outil selon l'une des revendications 3 à 6, **caractérisée en ce que** le capteur de position (35) est disposé sur une unité de manoeuvre (32) pour le bras changeur d'outil (23).

8. Machine-outil selon la revendication 7, **caractérisée en ce que** le capteur de position (35) est un capteur de fin de course, qui signale si le bras changeur d'outil (23) a adopté sa position prédéfinie pour la position de magasin.

9. Machine-outil selon l'une des revendications 1 à 8, **caractérisée en ce qu'**un élément de blocage (40), qui évite que le porte-outil (15) n'adopte sa position de magasin en cas de défaut d'orientation par rapport au preneur (21), est associé au contrôle de position (35, 40).

10. Machine-outil selon la revendication 9, **caractérisée en ce que** l'élément de blocage (40) comprend un élément d'enclenchement (41, 69) disposé sur le carquois à outils (17), auquel est associé un évidement sur le porte-outil (15).

11. Machine-outil selon la revendication 10, **caractérisée en ce que** l'élément d'enclenchement (69) est disposé dans le carquois à outils (17) et **en ce que**, si le porte-outil (17) est maintenu en bonne position dans le preneur (21), il s'engage dans une encoche d'entraînement (65) formée sur le porte-outil (17).

12. Machine-outil selon la revendication 11, **caractérisée en ce que** l'élément d'enclenchement (69) est un élément moulé, formé d'une seule pièce avec le carquois à outils (17).

13. Machine-outil selon la revendication 9, **caractérisée en ce que** l'élément de blocage (40) comprend un évidement (74) prévu sur le carquois à outils (17), auquel est associé une saille (73) sur le porte-outil (50).

14. Machine-outil selon l'une des revendications 1 à 13, **caractérisée en ce que** des moyens d'orientation (39), qui au moins lors du transfert entre la position de magasin et la position de travail fixent le porte-outil (15) de façon non rotative sur le preneur (21), sont prévus entre le preneur (21) et le porte-outil (15) porté par ce dernier.

15. Machine-outil selon la revendication 14, **caractérisée en ce que** les moyens d'orientation (39) libèrent le porte-outil (17) après qu'il ait été serré dans le raccordement d'outil (14), pour qu'il soit rotatif par rapport au preneur (21).

16. Machine-outil selon la revendication 15, **caractérisée en ce que** les moyens d'orientation (39) libèrent le porte-outil (15) serré dans le raccordement d'outil (14) par déplacement du preneur (21) par rapport à la broche porte-outil (11).

17. Machine-outil selon la revendication 15 ou 16, **caractérisée en ce que** les moyens d'orientation (39) sont des moyens d'enclenchement.

18. Machine-outil selon l'une des revendications 15 à 17, **caractérisée en ce que** les moyens d'orientation (39) comprennent au moins une saillie d'enclenchement (53, 54) prévue sur le preneur (21), à laquelle est associée une encoche d'orientation (55, 56) sur le porte-outil (15).

19. Machine-outil selon l'une des revendications 15 à 18, **caractérisée en ce que** le preneur (21) comporte des nervures (49) saillant vers l'intérieur en direction radiale, qui s'engagent dans une gorge (19) du preneur, qui est formée sur la périphérie d'un épaulement (18) prévu sur le porte-outil (15).

20. Machine-outil selon la revendication 18 ou 19, **caractérisée en ce qu'**au moins une encoche d'orientation (55, 56) est prévue dans ou à proximité de la gorge (19) du preneur et **en ce qu'**au moins la saillie d'enclenchement (53, 54) est prévue sur ou à proximité de la nervure (49).

21. Machine-outil selon la revendication 20, **caractérisée en ce que** lorsque le porte-outil (15) est inséré dans le raccordement d'outil (14), la saillie d'enclenchement (53, 54) est dirigée vers le haut vers ces derniers et l'encoche d'orientation (55, 56) est dirigée vers le bas.

22. Machine-outil selon la revendication 20 ou 21, **caractérisée en ce que** la saillie d'enclenChement (53, 54) est un coulisseau fixé sur la nervure (49) et l'encoche d'orientation (55, 56) est une encoche de position.

23. Machine-outil selon l'une des revendications 1 à 22, **caractérisée en ce que** sont prévus au moins deux bras changeurs d'outil (23), dont les preneurs (21) restent sur le porte-outil (15), aussi bien en position de magasin qu'en position de travail, les bras changeurs d'outils (23) étant montés de préférence sur un manchon (26) disposé de façon mobile longitudinalement par rapport à la broche porte-outil (11).
